Europäisches Patentamt

European Patent Office

Office européen des brevets

(19)

(11) Veröffentlichungsnummer: **0 320 714 B1**

(12) **EUROPÄISCHE PATENTSCHRIFT**

(45) Veröffentlichungstag der Patentschrift: **10.11.93**

(51) Int. Cl.⁵: **H04L 12/56**

(21) Anmeldenummer: **88120125.5**

(22) Anmeldetag: **02.12.88**

(54) **Einrichtungen zur Paketvermittlung.**

(30) Priorität: **18.12.87 DE 3742941**

(43) Veröffentlichungstag der Anmeldung:
**21.06.89 Patentblatt 89/25**

(45) Bekanntmachung des Hinweises auf die
Patenterteilung:
**10.11.93 Patentblatt 93/45**

(84) Benannte Vertragsstaaten:
**AT BE CH DE ES FR GB GR IT LI NL SE**

(56) Entgegenhaltungen:
**EP-A- 0 208 604**

**IEEE INTERNATIONAL CONFERENCE ON
COMMUNICATIONS '87, vol. 2, Juni 1987,
IEEE NEW YORK US, Seiten 769 - 773;
J.COUDREUSE et al.: "PRELUDE : AN ASYN-
CHRONOUS TIME-DIVISION SWITCHED NET-
WORK"**

(73) Patentinhaber: **Alcatel SEL Aktiengesellschaft
Lorenzstrasse 10
D-70435 Stuttgart(DE)**

(72) Erfinder: **Eilenberger, Gert, Dr.
Schillerstrasse 24
D-7312 Kirchheim(DE)**
Erfinder: **Schrodi, Karl
Marderweg 11
D-7258 Heimsheim(DE)**
Erfinder: **Wahl, Stefan
Hirschstrasse 29
D-7251 Hemmingen(DE)**

(74) Vertreter: **Brose, Gerhard et al
Alcatel SEL AG
Patent- und Lizenzwesen
Postfach 30 09 29
D-70449 Stuttgart (DE)**

## Beschreibung

Die Erfindung betrifft eine Paketvermittlungseinrichtung, eine Eingangseinheit hierzu und eine Ausgangseinheit hierzu.

Solche Paketvermittlungseinrichtungen sind bekannt, beispielsweise aus A.Thomas, J.P.Coudreuse, M.Servel, "Asynchronous Time-Division Techniques: An Experimental Packet Network Integrating Videocommunication", ISS '84 Florence, 7 - 11 May 1984, Session 32C Paper 2, Pages 1 - 7, (ISS = International Switching Symposium).

Die Übermittlung von Nachrichten mit statistischem Verkehrsaufkommen erfolgt bevorzugt in Paketform mit untereinander gleich langen Paketen über virtuelle Verbindungen. Derzeit wird davon ausgegangen, daß auch die Nachrichten mit deterministischem Verkehrsaufkommen in gleicher Weise und gemeinsam mit den anderen übermittelt werden.

In einer Paketvermittlungseinrichtung kann grundsätzlich nicht ausgeschlossen werden, daß gleichzeitig zwei oder mehr Pakete von unterschiedlichen Leitungen kommen, die dazu bestimmt sind, auf derselben Leitung weiterzulaufen.

Es müssen deshalb Pufferspeicher vorgesehen werden, in denen diejenigen Pakete warten können, die nicht sofort weiter übermittelt werden können. Der hierfür erforderliche Speicheraufwand hängt, abgesehen von der Länge der Pakete, insbesondere von der Zahl der zusammentreffenden Leitungen, von der Art des Verkehrsaufkommens und von der geforderten Verkehrsgüte ab. Bei bekannten Paketvermittlungseinrichtungen werden innerhalb des Koppelfeldes etwa 80 % aller Chipflächen für diese Speicher verwendet.

Der Erfindung liegt die Aufgabe zugrunde, eine Paketvermittlungseinrichtung anzugeben, die bei vergleichbarer Leistungsfähigkeit deutlich weniger Speicher benötigt.

Diese Aufgabe wird gelöst durch eine Paketvermittlungseinrichtung nach der Lehre des Hauptanspruchs. Eingangs- und Ausgangseinheiten hierfür sind in den Ansprüchen 3 und 5 enthalten. Vorteilhafte Ausgestaltungen sind den Unteransprüchen zu entnehmen. Andere Ausgestaltungen desselben Grundgedankens sind der europäischen Patentanmeldung EP A-0 320 772 "Verfahren zur hybriden Paketvermittlung und Einrichtungen hierzu" desselben Anmelders zu entnehmen.

Durch die Aufteilung der Pakete in Paketteile ergeben sich effektiv kürzere "Pakete", die auch einen entsprechend geringeren Speicheraufwand zur Folge haben.

Da aber nur noch die ersten Paketteile Wegeinformationen enthalten, muß auf andere Weise die Zusammengehörigkeit und damit auch die gleichartige Behandlung gewährleistet werden. Dies erfolgt dadurch, daß die einzelnen Paketteile nicht, wie sonst für Pakete üblich, an zufälliger Stelle in den Datenstrom eingefügt werden, sondern dadurch, daß sie einander nach einem vorgegebenen Muster, vorzugsweise in gleichen Abständen, folgen. Damit sich die effektive Verkürzung der Pakete auswirken kann, dürfen zusammengehörige Paketteile nicht unmittelbar aufeinander folgen, sie müssen vielmehr mit Paketteilen anderer Pakete abwechseln.

Vorzugsweise wird also innerhalb der Vermittlungseinrichtung jeweils eine feste Zahl von Paketen zu einem Rahmen zusammengefaßt, sämtliche Pakete in untereinander gleich lange Paketteile zerlegt und auf Unterrahmen aufgeteilt. Vermittelt wird auf der Basis von Unterrahmen im synchronen Zeitmultiplex. Der Speicherplatzbedarf im Koppelnetzwerk wird im Verhältnis Rahmen : Unterrahmen verringert. Als Speicher wirken in erster Linie die bei synchroner Zeitmultiplexvermittlung ohnehin erforderlichen Speicher. Eine zusätzliche Speicherwirkung kann erreicht werden, wenn an den Eingängen zusätzliche Leerpakete eingefügt werden und innerhalb der Vermittlungseinrichtung schneller getaktet wird.

Zu den ersten und bekanntesten Vermittlungseinrichtungen für schnelle Paketvermittlung gehört das Projekt PRELUDE des CNET (Centre National d'Etudes des Télécommunications) in Frankreich. Eine Beschreibung findet sich z.B. in IEEE International Conference on Communications '87, vol. 2, June 1987, IEEE New York US, Seiten 769 - 773; J. Coudreuse et al.: "PRELUDE: AN ASYNCHRONOUS TIME-DIVISION SWITCHED NETWORK". Bei dieser bekannten Vermittlungseinrichtung werden die ankommenden Pakete tatsächlich ebenfalls in eine Reihe von Paketteilen aufgeteilt, die dann anschließend zum Ausgang der Vermittlungsstelle vermittelt werden. Dabei erfolgt eingangsseitig eine Supermultiplexbildung; d.h., die Nachrichtenströme aller Eingänge werden zu einem einzigen Nachrichtenstrom zusammengefaßt. Dieser Supermultiplex-Nachrichtenstrom wird in einen Zwischenspeicher eingeschrieben, in anderer Reihenfolge wieder ausgelesen und durch Demultiplexen auf die verschiedenen Ausgänge verteilt. Um trotz Supermultiplexbildung die Übertragungsgeschwindigkeit nicht erhöhen zu müssen, werden die Paketteile eines Pakets nach Art einer Parallelverarbeitung (hier allerdings zeitlich gestaffelt) auf verschiedene Leitungen verteilt. Größere, mehrstufige Vermittlungsstellen können so kaum mehr realisiert werden.

Aus "Der Fernmelde = Ingenieur", 41, Jahrgang/Heft 9, September 1987, insbesondere Punkt 3.4 auf den Seiten 8 und 9, sowie dem Folgeheft, Heft 10, Oktober 1987, sind Paket-Übermittlungssysteme bekannt, bei denen ebenfalls eine feste Anzahl von Paketen auf der Übertragungsstrecke zu Rahmen zusammengefaßt sind.

Solche von außen vorgegebenen Rahmen werden vorteilhafterweise innerhalb der Vermittlungseinrichtung übernommen. Ohne zusätzliche Maßnahmen ergibt sich dann für Nachrichten, deren Pakete innerhalb der Rahmen periodisch wiederkehren, eine Leitungsvermittlung mit ihren Vorteilen (keine Laufzeitschwankungen (delay jitter) und keine Verluste).

Da für die meisten Nachrichten die einzelnen Pakete nicht in fester Folge auftreten, ergibt sich hier ein asynchrones Übertragungsverfahren, derzeit als ATM (asynchronous transfer mode) im Gespräch, wobei die einzelnen Pakete als ATM-Zellen bezeichnet werden. Für Nachrichten, deren Pakete periodisch wiederkehren, ergibt sich ein synchrones Übertragungsverfahren, derzeit als STM (synchronous transfer mode) im Gespräch. Die einzelnen Pakete werden als STM-Zellen bezeichnet. Im Zusammenhang mit dem synchronen Übertragungsverfahren werden auch Begriffe wie "Leitungsvermittlung¨, "CS" = "circuit switching" und "CS-Pakete" verwendet, im Zusammenhang mit dem asynchronen Übertragungsverfahren werden Begriffe wie "Paketvermittlung¨, "PS" = "packet switching", "PS-Pakete", "ATD" = Asynchronous Time Division" und "fast packet switching" verwendet. Kombinationen werden als hybrid bezeichnet.

Die Erfindung wird zwar mit Begriffen beschrieben, die in erster Linie auf räumlich konzentrierte Vermittlungseinrichtungen angewandt werden. Auch das folgende Ausführungsbeispiel stellt eine konzentrierte Vermittlungseinrichtung dar. Die vorliegende Erfindung ist aber gleichermaßen auch auf nicht konzentrierte Vermittlungseinrichtungen, beispielsweise Ringsysteme, anwendbar. Hierzu wird einerseits auf den bereits erwähnten Artikel aus "Der Fernmelde = Ingenieur" hingewiesen, wo Bus- und Ringsysteme unter 4.1.2 den Koppelanordnungen unter 4 untergeordnet sind, und andererseits auf die Veröffentlichung EP-A2-0 125 744, "Closed loop telecommunication system", in der ein Ringsystem beschrieben wird, in welchem immer ein kompletter Rahmen mit einer Vielzahl von Paketen umläuft, wozu Schieberegister oder andere Speicher erforderlich sind.

Im folgenden wird die Erfindung anhand eines Ausführungsbeispiels unter Zuhilfenahme der beiliegenden Zeichnungen weiter erläutert.

Fig.1    zeigt ein grobes Blockschaltbild einer erfindungsgemäßen Vermittlungseinrichtung.

Fig.2    zeigt ein Blockschaltbild einer Eingangseinheit für die Vermittlungseinrichtung nach Figur 1.

Fig.3    zeigt ein Blockschaltbild einer Ausgangseinheit für die Vermittlungseinrichtung nach Figur 1.

Fig.4    zeigt ein detailliertes Blockschaltbild eines Eingangs-Sortierers für die Eingangseinheit nach Figur 2.

Fig.5    zeigt ein detailliertes Blockschaltbild eines Ausgangs-Sortierers für die Ausgangseinheit nach Figur 3.

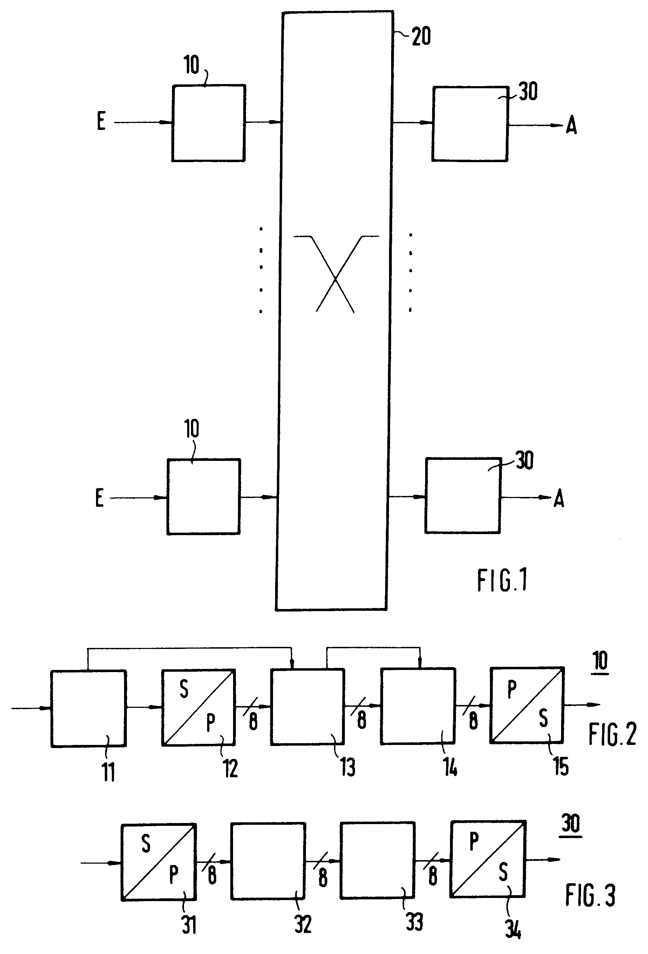

Wie Figur 1 zeigt, weist eine erfindungsgemäße Vermittlungseinrichtung zunächst, wie jede andere Vermittlungseinrichtung, eine Mehrzahl von Eingängen E, eine Mehrzahl von Ausgängen A und ein Koppelnetzwerk 20 auf. Erfindungsgemäß ist nun zwischen jeden Eingang E und das Koppelnetzwerk 20 eine Eingangseinheit 10 und zwischen das Koppelnetzwerk 20 und jeden Ausgang A eine Ausgangseinheit 30 eingefügt.

Figur 2 zeigt nun eine erfindungsgemäße Eingangseinheit 10 in weiterem Detail. Sie weist eine Synchronisationseinrichtung 11, einen Serien-Parallel-Wandler 12, einen Markenumwerter 13 einen Eingangs-Sortierer 14 und einen Parallel-Serien-Wandler 15 auf.

Die Synchronisationseinrichtung 11 erkennt die im Eingangsdatenstrom enthaltenen Takte, insbesondere den Bittakt und die Anfänge der eingehenden Pakete. Weist der äußere Datenstrom bereits einen Rahmentakt auf, so kann dieser übernommen werden. Anderfalls wird jeweils eine feste Anzahl von Paketen, z.B. 70, zu einem Rahmen zusammengefaßt. Auch wenn ein äußerer Rahmentakt vorhanden ist, kann der innere davon abweichen. Ein synchrones Übertragungsverfahren für einzelne Nachrichten ist dann allerdings nicht immer gewährleistet.

Der Serien-Parallel-Wandler 12 wandelt den Datenstrom oktettweise, d.h. zu jeweils 8 Bit, in einen parallelen Datenstrom. Die hierfür erforderliche Synchronisation durch die Synchronisationseinrichtung 11 ist in Figur 2 nicht eingezeichnet.

Der Markenumwerter 13 ändert zunächst das Format der einzelnen Pakete in sich. Jedes Paket besteht aus einem Informationsteil (payload) und einer vorausgehenden Marke (header, label). Die Marke ist eine Information für die nächste Vermittlungsstelle, die ankommende Marke wird deshalb zunächst durch eine abgehende Marke ersetzt. Zusätzlich kommt eine interne Marke hinzu, die Prioritätsangaben (z.B. ATM, STM), Wegeangaben und Angaben über die interne Bedeutung (z.B. Steuerpaket, Leerpaket) enthält. Außerdem kommt, zumindest bei ATM-Paketen, eine Markierung für das Paketende hinzu. Bedingt durch die hinzukommende Information wird im Markenumwerter 13 der Bittakt erhöht. Hier können deshalb auch Phasenschwankungen zwischen internem und externem Takt ausgeglichen werden. An dieser Stelle kann auch problemlos die Folgefrequenz der Pakete (Pakettakt) erhöht werden. Hierzu werden zusätzliche Leerpakete hinzugefügt, die innerhalb des Koppelnetzwerks 20 wie zusätzliche Pufferspeicher wirken.

Der Eingangs-Sortierer 14 erhält vom Markenumwerter 13 einerseits die Pakete in internem Format und andererseits den Pakettakt sowie davon abgeleitete Takte (Oktettakt, Bittakt). Jedes Paket wird in eine vorgegebene Zahl untereinander gleich langer Paketteile zerlegt. Die Paketteile der verschiedenen Pakete werden nun derart umsortiert, daß Unterrahmen entstehen, die von jedem Paket ein Paketteil enthalten, wobei die zusammengehörigen Paketteile immer gleich weit voneinander entfernt sind. Sind beispielsweise 70 Pakete zu je 40 Oktetten zu einem Rahmen zusammengefaßt und bildet jedes Oktett einen Paketteil, so bilden nach dem Umsortieren jeweils 70 Oktette einen Unterrahmen, wobei jedes Oktett einem anderen Paket angehört. Für jedes Paket wird dann wie für eine leitungsvermittelte Verbindung durch das erste Paketteil eine Verbindung durch das Koppelnetzwerk 20 aufgebaut, auf der dann die übrigen Paketteile folgen. Durch das letzte Paketteil eines Pakets wird die Verbindung wieder abgebaut. Reicht ein Paketteil nicht für die Wegeinformation durch das ganze Koppelnetzwerk aus, so muß der Verbindungsaufbau stufenweise erfolgen.

Der Aufbau virtueller Verbindungen verläuft bekanntermaßen so, daß in einer Verbindungsaufbauphase der Weg vorgezeichnet wird, den die später kommenden Pakete zu nehmen haben. Dies erfolgt beispielsweise dadurch, daß am Anfang oder Ende eines Übermittlungsabschnitts Tabellen, z.B. in Markenumwertern, angelegt werden, durch die jeder ankommenden Marke eine abgehende Marke zugeordnet werden kann. Dadurch ist dann der konkrete physikalische Weg festgelegt, nicht jedoch der Zeitpunkt der Weitergabe. Bei einer erfindungsgemäßen Paketvermittlungseinrichtung wird nun für jedes Paket innerhalb des bereits festgelegten Wegs noch ein bestimmter Zeitschlitz für die einzelnen Paketteile festgelegt.

Sollen STM-Verbindungen aufgebaut werden, so kann diesen auf dem vorbestimmten Weg ein fester Zeitschlitz reserviert werden. Diese Reservierung kann dadurch erfolgen, daß dem letzten Paketteil keine Paketende-Information mitgegeben wird.

Der auf den Eingangs-Sortierer 14 folgende Parallel-Serien-Wandler 15 wandelt die einzelnen Oktette wieder in einen seriellen Paketfluß.

Die Ausgangseinheiten 30 sind, wie Figur 3 zeigt, entsprechend aufgebaut. Sie weisen je einen Serien-Parallel-Wandler 31, einen Ausgangs-Sortierer 32, einen Paketformatwandler 33 und einen Parallel-Serien-Wandler 34 auf.

Der Ausgangs-Sortierer 32 sortiert die Paketteile wieder derart um, daß die zu einem Paket gehörenden Paketteile wieder zusammengefaßt werden.

Der Paketformatwandler 33 entfernt die internen Marken und die Paketende-Markierungen. Sind in den Eingangseinheiten 10 Leerpakete eingefügt worden, so müssen jetzt ebensoviele Pakete wieder entnommen werden.

Im gedanklich einfachsten Fall sind in jeder Stufe der Vermittlungseinrichtung alle Rahmen und Unterrahmen zueinander synchron und der erste Unterrahmen eines Rahmens enthält sämtliche Paketanfänge. Dann werden mit dem überall gleichzeitig auftretenden ersten Unterrahmen im ganzen Koppelnetzwerk 20 auf den schon vorbestimmten Wegen für diesen und alle zum selben Rahmen gehörenden Unterrahmen die Zeitschlitze fest zugeteilt, wobei diese Zuteilung für STM-Verbindungen vorbestimmt, für ATM-Verbindungen frei ist. Beim letzten Unterrahmen werden dann alle Zeitschlitzzuteilungen wieder aufgehoben. Die einfachste Art, bei STM-Verbindungen immer die gleiche Zeitschlitzzuteilung zu garantieren, besteht darin, diese Zuteilung am Ende eines Pakets gar nicht aufzuheben, was durch eine fehlende Paketende-Information erreicht werden kann.

Dieser einfache Fall setzt voraus, daß alle Wege durch die Vermittlungseinrichtung gleich lang sind. Dadurch sind verschiedene Koppelnetzstrukturen ausgeschlossen. Ist aber sichergestellt, daß Paketanfänge und Paketenden aus dem Datenstrom erkennbar sind, so brauchen sie nicht auch noch an der zeitlichen Lage erkennbar zu sein. Die Rahmen müssen dann nicht mehr zueinander synchron sein. Im Extremfall kann für jedes an einem der Eingänge E ankommende Paket ein eigener Rahmen gebildet werden.

Bevorzugt wird, für jeden Eingang E und damit für jede Eingangseinheit 10 eine Rahmen- und Unterrahmenstruktur aufzubauen, die Eingangseinheiten 10 untereinander aber nicht zu synchronisieren.

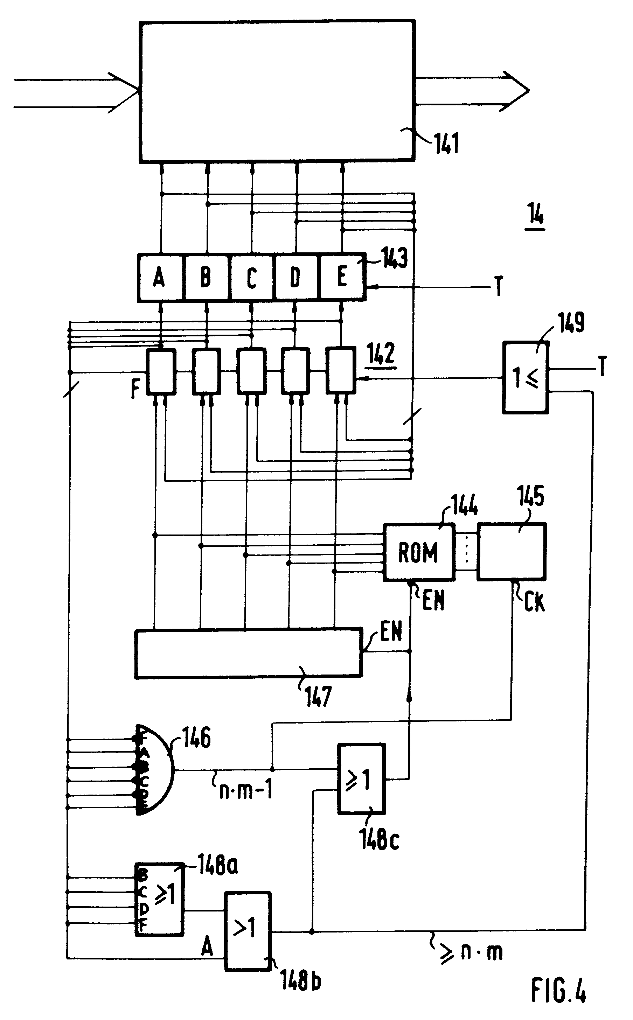

Für diesen Fall wird nun anhand der Figur 4 eine bevorzugte Ausführungsform des Eingangs-Sortierers 14 beschrieben. Dieser Eingangs-Sortierer 14 arbeitet mit einem Rahmenspeicher 141, der nicht mehr Speicherplätze benötigt, als für genau einen Rahmen erforderlich sind, und mit dem dennoch innerhalb des Rahmens in der erforderlichen Weise umsortiert wird.

Der Eingangs-Sortierer 14 besteht im wesentlichen aus dem Rahmenspeicher 141 und einer Adressiereinheit, die einen Volladdierer 142, ein Register 143, einen Festwertspeicher (ROM) 144, einen Zähler 145, ein Sechsfach-UND-Gatter 146, einen Speicher 147 und weitere Gatter 148a, 148b, 148c und 149 enthält.

Die Aufgabe der Adressiereinheit umfaßt die Umformung des seriellen Stroms von Paketen in die synchronen Zeitmultiplex-Unterrahmen mit Paketteilen. Jeweils n Pakete bilden einen Rahmen. Der Rahmenspeicher 141 enthält n X m Speicherwörter für je ein Paketteil, wobei m die Zahl der Paketteile pro Paket angibt. Der Rahmenspeicher 141 ist von 0 bis (n X m - 1) durchnumeriert. Jeder Zeitmultiplex-Unterrahmen enthält von jedem Paket eines Rahmens ein Paketteil. Die Reihenfolge der Paketteile im Unterrahmen ist gleich der Reihenfolge der Pakete im Rahmen. Im ersten Unterrahmen befinden sich also die ersten Paketteile aller Pakete, im zweiten Unterrahmen die zweiten Paketteile aller Pakete, usw. Nun wird jeweils ein Paketteil aus dem Rahmenspeicher 141 ausgelesen und unmittelbar danach ein neues Paketteil in den freigewordenen Speicherplatz eingeschrieben.

Da die Paketteile in einer anderen Reihenfolge in den Rahmenspeicher 141 eingeschrieben werden als ausgelesen, entsteht eine Verwürfelung der Paketteile im Rahmenspeicher 141. Diese Verwürfelung ist zyklisch und kann durch eine mathematische Funktion beschrieben werden, die durch die Adressiereinheit realisiert wird. Innerhalb eines jeden Rahmens müssen die Adressen des Rahmenspeichers 141 mit einer anderen Schrittweite $S_k$ durchlaufen werden, wobei gilt:

$$S_k = (m \times S_{k-1}) \text{ modulo } (n \times m - 1)$$

und

$$S_1 = 1.$$

Bei einer von 1 verschiedenen Schrittweite $S_k$ muß der Rahmenspeicher dann $S_k$ mal durchlaufen werden, bis sämtliche Speicherplätze einmal adressiert wurden. Beim Überschreiten des Adressbereichs muß um n X m - 1 Speicherplätze zurückadressiert werden, was durch Addition des Zweierkomplements von n X m - 1 erfolgt. Erst beim $S_k$-ten Durchlauf wird wieder exakt das Ende des Rahmenspeichers 141 erreicht. Dann ist ein Rahmen komplett ausgelesen und der nächste komplett eingeschrieben. Mit der nächsten Schrittweite wird dann wieder ein Rahmen ausgelesen und ein Rahmen eingeschrieben.

Figur 4 zeigt eine Realisierungsmöglichkeit für das Beispiel n = 6 und m = 3. Im Rahmenspeicher 141 sind also die Speicherplätze 0 bis 17 zu adressieren. Bei der Adresse 17 ist ein Rahmen komplett abgearbeitet, es muß zum nächsten Rahmen und damit zur nächsten Schrittweite übergegangen werden. Wird die Adresse 17 überschritten, dann muß der Rahmenspeicher 141 nochmals mit derselben Schrittweite durchlaufen werden, hierzu muß zunächst die Adresse um 17 reduziert werden, um wieder innerhalb den Adressbereich zu gelangen.

Die jeweilige Adresse ist im Register 143 enthalten. Sie ist fünfstellig, mit den Stellen A....E, wobei A das höchstwertige, E das niedrigstwertige Bit darstellt. Der Volladdierer 142 addiert zum Inhalt des Registers 143 die vom Festwertspeicher 144 angegebene aktuelle Schrittweite. Das Ergebnis der Addition wird wieder als neue Adresse in das Register 143 übernommen. Die Übernahme in das Register wird von einem Takt T veranlaßt, der auch, über ein ODER-Gatter 149, den Volladdierer zu einer Addition veranlaßt. Der Volladdierer 142 weist einen Übertrag F aus.

Das Sechsfach-UND-Gatter erkennt den Zählerstand n X m - 1 = 17 bei A = E = 1 und B = C = D = F = 0. Dann wird über den Takteingang Ck des Zählers 145 dieser weitergezählt. Der Zählerstand des Zählers 145 wird zur Adressierung des Festwertspeichers 144 verwendet, so daß jetzt jeweils die nächste Schrittweite zum Inhalt des Registers 143 addiert wird. Die jeweils vorkommenden Schrittweiten werden einmal anhand der Formel für $S_k$ bestimmt und im Festwertspeicher 144 abgespeichert. Weiter werden bei der Summe n X m - 1 = 17 über ein ODER-Gatter 148c einerseits die Ausgänge des Festwertspeichers 144 über einen negierenden Enable-Eingang EN deaktiviert und andererseits die Ausgänge des Speichers 147 über den Enable-Eingang EN aktiviert. Bei der nächsten durch den Takt T veranlaßten Addition wird deshalb das im Speicher 147 enthaltende Zweierkomplement von 17 zum Inhalt des Registers 143 addiert, so daß dann der Inhalt des Registers 143 wieder auf Null steht.

Wird die Adresse n X m - 1 = 17 überschritten, dann muß die Summe um n X m - 1 = 17 reduziert werden, die Schrittweite, und damit der Zählerstand des Zählers 145 muß aber beibehalten werden. Eine Summe ≥ n X m wird durch ein ODER-Gatter 148a und ein UND-Gatter 148b festgestellt. Dies ist der Fall, wenn gleichzeitig (UND-Gatter 148b) B + C + D + F = 1 (ODER-Gatter 148a) und A = 1 ist. In diesem Fall werden wieder über das ODER-Gatter 148c die Enable-Eingänge EN des Festwertspeichers 144 und des Speichers 147 umgeschaltet, so daß anstelle der Schrittweite das Zweierkomplement als zweiter Summand am Volladdierer 142 ansteht. Außerdem wird über das ODER-Gatter 149 eine vom Takt T unabhängige Addition im Volladdierer 142 veranlaßt.

Für den Fall, daß in jeder Stufe der Vermittlungseinrichtung rahmensynchron gearbeitet wird, können auch die Ausgangs-Sortierer 32 in den Ausgangseinheiten 30 genau wie die Eingangs-Sortierer 14 aufgebaut sein. Bei der Berechnung der Schrittweiten ist hier aber n und m zu vertauschen, so daß dann gilt:

$S_k = (n \times S_{k-1})$ modulo $(n \times m - 1)$

und

$S_1 = 1$.

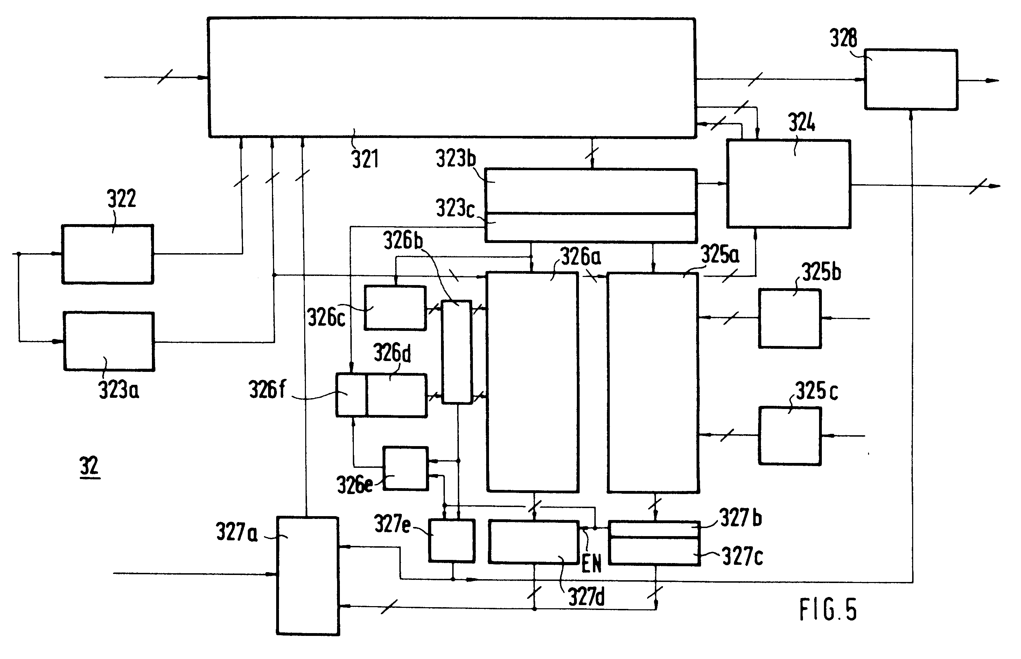

Für den Fall, daß intern nicht rahmensynchron gearbeitet wird, müssen die Paketanfänge und Paketenden aus dem Datenstrom erkennbar sein. Anhand der Figur 5 wird hierfür eine bevorzugte Ausführungsform des Ausgangs-Sortierers 32 beschrieben. Dieser Ausgangs-Sortierer 32 arbeitet mit einem Speicher 321, der so viele Speicherplätze benötigt, wie für zwei (um etwaige zusätzliche Leerpakete erweiterte) Rahmen erforderlich sind. Diesem Beispiel wird ein externer Rahmen mit 70 Paketen zu 40 Oktetten zugrundegelegt.

Der Ausgangs-Sortierer 32 besteht im wesentlichen aus dem Speicher 321, einer Steuerpaket-Ausgabeeinheit 324 und einer Adressiereinheit, die einen zyklischen Einschreibe-Zähler 322, einen zyklischen Such-Zähler 323a, einen Paket-Marken-Detektor 323b, einen Überschreib-Detektor 323c, einen STM-Adressen-Speicher 325a, einen Auslese-Zähler 325b, einen Einschreibe-Zähler 325c, einen ATM-Adressen-Speicher 326a, einen Adressen-Komparator 326b, zwei Zähler 326c und 326d, einen Addierer 327a, einen STM-Detektor 327b, eine Leerpaket-Einfügeeinheit 328, zwei Puffer 327c und 327d und mehrere Gatter 326f, 326e und 327e enthält.

Die Aufgabe der Steuerpaket-Ausgabeeinheit 324 besteht in der gesonderten Ausgabe von Steuerpaketen. Diese Steuerpakete werden direkt den Steuereinheiten zugeführt.

Die Aufgabe der Adressiereinheit umfaßt die Umformung der synchronen Zeitmultiplex-Unterrahmen in den seriellen Paketstrom. Außerdem reduziert die Adressiereinheit das Paketformat direkt auf den Informationsteil (payload) und die vorausgehende Marke (Label) und gleichzeitig wird der koppelnetzinterne Pakettakt auf den externen Pakettakt umgesetzt. Die STM-Pakete werden derart aus dem Speicher 321 ausgelesen, daß sie für die Dauer der Verbindung immer den gleichen Platz im Rahmen einnehmen.

Der Einschreibe-Zähler 322 wird vom koppelnetzinternen Paketteiltakt getaktet und adressiert in zyklischer Reihenfolge alle Speicherplätze des Speichers 321, in die die vom Koppelnetz kommenden Paketteile eingeschrieben werden. Der Such-Zähler 323a wird mit demselben Takt wie der Einschreibe-Zähler 322 getaktet und adressiert die Speicherplätze des Speichers 321, um eine Rahmendauer gegenüber dem Einschreibe-Zähler 322 verzögert. Der Speicher 321 gibt das vom Such-Zähler 323a adressierte Paketteil an den Paket-Marken-Detektor 323b. Der Paket-Marken-Detektor 323b untersucht, ob es sich bei dem adressierten Paketteil um den ersten Paketteil eines Pakets handelt und unterscheidet in diesem Fall, ob es sich um ein ATM-, STM- oder ein Steuerpaket handelt. Die Adressen des Such-Zählers 323a werden auch zum ATM- und zum STM-Adressen-Speicher (326a, 325a) und zur Steuerpaket-Ausgabeeinheit 324 geführt. Wenn der Paket-Marken-Detektor 323b ein erstes Paketteil eines Pakets erkannt hat, legt er ein WRITE-Signal an die entsprechende Einheit (324, 325a, 326a) an, und diese übernimmt dann die Adresse des Such-Zählers 323a.

Der Einschreibe-Zähler 325c wird mit dem internen Paketteiltakt getaktet und adressiert den STM-Adressen-Speicher 325a zyklisch mit den Adressen von 0 bis 69 (+ zusätzliche Leerpaket-Zahl). Hat der Paket-Marken-Detektor 323b eine STM-Verbindung erkannt, so legt er ein WRITE-Signal an den STM-Adressen-Speicher 325a an und dieser speichert die Adresse des Such-Zählers 323a in die Speicherstelle, die vom Einschreibe-Zähler 325c adressiert ist, ein. Unter der Voraussetzung, daß von der letzten Koppelnetzstufe vor dem Ausgangs-Sortierer 32 STM-Paketteile nur in die ersten 70 Oktette des Unterrahmens plaziert werden, kann garantiert werden, daß die Pakete einer STM-Verbindung immer an der gleichen Stelle des Rahmens stehen. Man kann sich dies als eine Abbildung der STM-Adresseneinträge im STM-Adressen-Speicher 325a auf die Pakete im Rahmen vorstellen.

Der Auslese-Zähler 325b wird mit dem externen Pakettakt getaktet und adressiert den STM-Adressen-Speicher 325a zyklisch mit den Leseadressen 0 bis 69. Der vom Auslese-Zähler 325b adressierte STM-Adressen-Speicherinhalt wird an den STM-Detektor 327b ausgegeben und im STM-Adressen-Speicher 325a auf 0 zurückgesetzt. Der STM-Detektor 327b erkennt, ob der eingelesene Wert größer als 0 ist. Im Falle, daß der Wert größer als 0 ist, sperrt der STM-Detektor 327b den Puffer 327d (disable) und legt ein logisch 0 an das UND-Gatter 327e und das ODER-Gatter 326e. Der Puffer 327c übernimmt die Adresse vom STM-Detektor 327b und gibt sie an den Addierer 327a. Der Addierer 327a addiert zuerst einen Offset zur Adresse. Dadurch zeigt die Adresse am Addiererausgang auf den ersten Paketteil der Marke im Speicher 321. Der Addierer 327a erhält den externen Paketteiltakt und addiert mit diesem Takt ständig den Wert 70 (+ Zahl der zusätzlichen Leerpakete) hinzu. Wenn der Addierer 327a das letzte Paketteil eines Pakets adressiert, steht an seinem Eingang wieder eine neue Adresse an, wenn nicht durch das UND-Gatter 327e gesperrt wird.

Die Einheiten 326a bis 326f bilden zusammen einen modifizierten FIFO-Speicher. Der ATM-Adressen-Speicher 326a wird mit dem (Einschreibe-) Zähler 326c und dem (Auslese-) Zähler 326d adressiert. Ein WRITE-Signal des Paket-Marken-Detektors 323b an dem ATM-Adressen-Speicher 326a veranlaßt das Speichern der Adresse, die durch den Such-Zähler 323a zur Verfügung gestellt wird, in dem Speicherplatz, der durch den Zähler 326c adressiert wird. Der Zähler 326c wird durch das WRITE-Signal des Paket-Marken-Detektors 323b inkrementiert und adressiert die (z.B. 2 X 78) Speicherplätze des ATM-Adressen-Speichers 326a zyklisch. Der Zähler 326d wird durch ein ODER-Gatter 326f getaktet. Ein Eingang des ODER-Gatters 326f ist mit dem Überschreib-Detektor 323c verbunden. Dieser erkennt aus der Anzahl der STM- und ATM-WRITE-Signale des Paket-Marken-Detektors 323b je Rahmendauer das Überschreiben eines noch nicht ausgegebenen ATM-Pakets im Speicher 321 durch ein neues Paket.

Der Komparator 326b vergleicht die Zählerstände des Zählers 326d und des Zählers 326c und gibt ein logisch 1 an das ODER-Gatter 326e und das UND-Gatter 327e, wenn die Zählerstände gleich sind. Der Komparator 326b zeigt somit an, ob ein ATM-Paket im ATM-Adressen-Speicher 326a eingetragen ist und sperrt im Falle gleicher Zählerstände die Inkrementierung des Auslese-Zählers 326d. Ist der ATM-Adressen-Speicher 326a leer und detektiert der STM-Detektor 327b auch kein STM-Paket, so legt er ein logisch 1 an das UND-Gatter 327e und dessen Ausgang geht somit auf logisch 1. Hierdurch wird der Addierer 327a gesperrt und die Leerpaket-Einfügeeinheit 328 gibt ein Leerpaket aus.

**Patentansprüche**

1. Paketvermittlungseinrichtung mit einer Mehrzahl von Eingängen, einer Mehrzahl von Ausgängen und einem Koppelnetzwerk mit einer Mehrzahl von Eingängen, die jeweils einem der Eingänge der Paketvermittlungseinrichtung zugeordnet sind und mit einer Mehrzahl von Ausgängen, die jeweils einem der Ausgänge der Paketvermittlungseinrichtung zugeordnet sind,
**dadurch gekennzeichnet,** daß zwischen jedem Eingang (E) der Paketvermittlungseinrichtung und dem zugehörigen Eingang des Koppelnetzwerkes (20) eine Eingangseinheit (10) und zwischen jedem Ausgang des Koppelnetzwerks (20) und dem zugehörigen Ausgang (A) der Paketvermittlungseinrichtung eine Ausgangseinheit (30) vorhanden ist, daß die Eingangseinheiten (10) derart ausgestaltet sind, jedes Paket in eine Mehrzahl von Paketteilen aufzuteilen und diese Paketteile nach vorgegebenem Muster zusammen mit Paketteilen anderer an demselben Eingang ankommenden Pakete über einen größeren Zeitraum derart zu verteilen, daß die zusammengehörigen Paketteile voneinander getrennt durch das Koppelnetzwerk (20) übertragen werden und daß die Ausgangseinheiten (30) derart ausgestaltet sind, die zusammengehörigen Paketteile aufgrund des vorgegebenen Musters wieder zu Paketen zusammenzufassen.

2. Paketvermittlungseinrichtung nach Anspruch 1, dadurch gekennzeichnet, daß jede Eingangseinheit (10) derart ausgestaltet ist, eine Mehrzahl von Paketen jeweils zu einem Rahmen zusammenzufassen, sämtliche Pakete in eine Mehrzahl untereinander gleich langer Paketteile zu zerlegen, und die Paketteile derart zeitlich umzusortieren, daß jeder Rahmen in eine Mehrzahl von Unterrahmen aufgeteilt ist, daß die Anzahl der Paketteile innerhalb eines Unterrahmens gleich ist der Anzahl der Pakete innerhalb eines Rahmens und daß die zum selben Paket gehörenden Paketteile innerhalb eines jeden Unterrahmens dieselbe Position einnehmen, daß das Koppelnetzwerk (20) derart ausgestaltet ist, durch die ersten Paketteile der Pakete Zeitmultiplexkanäle festzulegen, wobei die folgenden Paketteile diese Zeitmultiplexkanäle benützen und daß jede Ausgangseinheit (30) derart ausgestaltet ist, die jeweils zu einem Paket gehörenden Paketteile wieder zusammenzufassen.

3. Eingangseinheit (10) für eine Paketvermittlungseinrichtung mit einer Mehrzahl von Eingängen, einer Mehrzahl von Ausgängen und einem Koppelnetzwerk mit einer Mehrzahl von Eingängen, die jeweils einem der Eingänge der Paketvermittlungseinrichtung zugeordnet sind und mit einer Mehrzahl von Ausgängen, die jeweils einem der Ausgänge der Paketvermittlungseinrichtung zugeordnet sind, bei der zwischen jedem Eingang (E) der Paketvermittlungseinrichtung und dem zugehörigen Eingang des Koppelnetzwerkes (20) eine Eingangseinheit (10) vorhanden ist, **dadurch gekennzeichnet,** daß die Eingangseinheit (20) einen Eingangs-Sortierer (14) mit einem Speicher (141) und einer Adressiereinheit (142....149) aufweist und daß die Adressiereinheit (142....149) derart ausgestaltet ist, das Einschreiben in den Speicher (141) und das Wiederauslesen aus dem Speicher (141) derart zu steuern, daß jedes Paket in eine Mehrzahl von Paketteilen aufgeteilt und diese Paketteile zusammen mit Paketteilen anderer an demselben Eingang ankommenden Pakete über einen größeren Zeitraum nach vorgegebenem Muster verteilt werden.

4. Eingangseinheit nach Anspruch 3, dadurch gekennzeichnet, daß die Adressiereinheit (142....149) einen Volladdierer (142) und ein den Ausgängen des Volladdierers (142) nachgeschaltetes Register (143) aufweist, dessen Inhalt als Adresse an den Speicher (141) angelegt wird, daß aus einem mit dieser Adresse adressierten Speicherplatz im Speicher (141) zunächst ein Paketteil ausgelesen und unmittelbar danach ein Paketteil eingeschrieben wird, daß darauf die Adresse mittels des Volladdierers (142) um eine vorgegebene Schrittweite $S_k$ erhöht und bei Überschreiten des Adressbereichs wieder um die Anzahl der adressierbaren Speicherplätze reduziert wird und daß die Schrittweite $S_k$ entsprechend der Beziehung

$$S_k = (m \times S_{k-1}) \text{ modulo } (n \times m - 1),$$

mit

$$S_1 = 1,$$

n = Verhältnis des Zeitraums, über den die Paketteile eines Pakets verteilt sind, zur Dauer eines Pakets (z.B. n = 70) und

m = Zahl der Paketteile pro Paket (z.B. m = 40)

geändert wird, wenn die letzte Adresse des Adressbereichs erreicht wird.

5. Ausgangseinheit (30) für eine Paketvermittlungseinrichtung mit einer Mehrzahl von Eingängen, einer Mehrzahl von Ausgängen und einem Koppelnetzwerk mit einer Mehrzahl von Eingängen, die jeweils einem der Eingänge der Paketvermittlungseinrichtung zugeordnet sind und mit einer Mehrzahl von Ausgängen, die jeweils einem der Ausgänge der Paketvermittlungseinrichtung zugeordnet sind, bei der zwischen jedem Ausgang des Koppelnetzwerkes (20) und dem zugehörigen Ausgang (A) der Paketvermittlungseinrichtung eine Ausgangseinheit (30) vorhanden ist, wobei die Paketvermittlungseinrichtung derart ausgestaltet ist, jedes Paket in eine Mehrzahl von Paketteilen aufzuteilen und diese Paketteile nach vorgegebenem Muster zusammen mit Paketteilen anderer an demselben Eingang ankommenden Pakete über einen größeren Zeitraum derart zu verteilen, daß die zusammengehörigen Paketteile voneinander getrennt durch das Koppelnetzwerk (20) übertragen werden, wobei die Ausgangseinheit (30) einen Ausgangs-Sortierer (32) mit einem Speicher (141, 321) und einer Adressiereinheit (142....149, 322....327) aufweist und daß die Adressiereinheit (142....149, 322....327) derart ausgestaltet ist, das Einschreiben in den Speicher (141, 321) und das Wiederauslesen aus dem Speicher (141, 321) derart zu steuern, daß die zusammengehörigen Paketteile aufgrund des vorgegebenen Musters wieder zu Paketen zusammengefaßt werden.

6. Ausgangseinheit nach Anspruch 5, dadurch gekennzeichnet, daß die Adressiereinheit (142....149) einen Volladdierer (142) und ein den Ausgängen des Volladdierers (142) nachgeschaltetes Register (143) aufweist, dessen Inhalt als Adresse an den Speicher (141) angelegt wird, daß aus einem mit dieser Adresse adressierten Speicherplatz im Speicher (141) zunächst ein Paketteil ausgelesen und unmittelbar danach ein Paketteil eingeschrieben wird, daß darauf die Adresse mittels des Volladdierers (142) um eine vorgegebene Schrittweise $S_k$ erhöht und bei Überschreiten des Adressbereichs wieder um die Anzahl der adressierbaren Speicherplätze reduziert wird und daß die Schrittweite $S_k$ entsprechend der Beziehung

$$S_k = (n \times S_{k-1}) \text{ modulo } (n \times m - 1),$$

mit

$$S_1 = 1,$$

n = Verhältnis des Zeitraums, über den die Paketteile eines Pakets verteilt sind, zur Dauer eines Pakets (z.B. n = 70) und

m = Zahl der Paketteile pro Paket (z.B. m = 40)

geändert wird, wenn die letzte Adresse des Adressbereichs erreicht wird.

7. Ausgangseinheit nach Anspruch 5, dadurch gekennzeichnet, daß die Adressiereinheit (322....327) einen Paket-Marken-Detektor (323b) enthält, der Paketanfänge erkennt und daß die Paketteile aufgrund des vorgegebenen Musters, beginnend mit den durch den Paket-Marken-Detektor (323b) erkannten Paketanfängen, wieder zu Paketen zusammengefaßt werden.

## Claims

1. A packet-switching facility comprising a plurality of inputs, a plurality of outputs, and a switching network having a plurality of inputs each associated with one of the inputs of the packet-switching facility and a plurality of outputs each associated with one of the outputs of the packet-switching facility,

   **characterized in** that an input unit (10) is provided between each input (E) of the packet-switching facility and the associated input of the switching network (20), that an output unit (30) is provided between each output of the switching network (20) and the associated output (A) of the packet-switching facility, that the input units (10) are designed to divide each packet into a plurality of subpackets and to distribute said subpackets, together with subpackets of other packets arriving at the same input, over a longer period of time according to a predetermined pattern in such a way that the subpackets belonging together are transferred through the switching network (20) separately, and that the output units (30) are designed to recombine the subpackets belonging together into packets on the basis of the predetermined pattern.

2. A packet-switching facility as claimed in claim 1, characterized in that the input units (10) is designed to combine a plurality of packets into a frame, to divide all packets into a plurality of subpackets of equal length, and to re-sort the subpackets in time so that each frame is divided into a plurality of subframes, that the number of subpackets within a sub-frame is equal to the number of packets within a frame and that the subpackets belonging to the same packet occupy the same position within each subframe, that the switching network (20) is designed to define time-division-multiplex channels via the first subpackets of the packets, with the next subpackets using said time-division-multiplex channels, and that each output unit (30) is designed to recombine the subpackets belonging to a packet.

3. An input unit (10) for a packet-switching facility comprising a plurality of inputs, a plurality of outputs, and a switching network having a plurality of inputs each associated with one of the inputs of the packet-switching facility and a plurality of outputs each associated with one of the outputs of the packet-switching facility, wherein an input unit (10) is provided between each input (E) of the packet-switching facility and the associated input of the switching network (20), **characterized in** that the input unit (10) includes an input sorter (14) having a memory (141) and an addressing unit (142....149), and that the addressing unit (142....149) is designed to control the writing into and reading from the memory (141) in such a manner that each packet is divided into a plurality of subpackets and that said subpackets, together with subpackets of other packets arriving at the same input, are distributed over a longer period of time according to a predetermined pattern.

4. An input unit as claimed in claim 3, characterized in that the addressing unit (142....149) includes a full adder (142) and a register (143) which is connected to the outputs of the full adder (143) and whose contents are applied as an address to the memory (141), that first a subpacket is read from a location in the memory (149) specified by said address, that immediately thereafter, a subpacket is written into said location, that the address is then increased by a predetermined step value $S_k$ by means of the full adder (142) and, upon exceeding the address range, reduced by the number of addressable locations, and that the step value $S_k$ is changed according to the relation

   $$S_k = (m \times S_{k-1}) \text{ modulo } (n \times m - 1),$$

   where

   $$S_1 = 1$$

       n   = ratio of the period over which the subpackets of a packet are distributed to the duration of a packet (e.g., n = 70)

       m   = number of subpackets per packet (e.g., m = 40),

   when the last address of the address range is reached.

5. An output unit (30) for a packet-switching facility comprising a plurality of inputs, a plurality of outputs, and a switching network with a plurality of inputs each associated with one of the inputs of the packet-switching facility and a plurality of outputs each associated with one of the outputs of the packet-switching facility, wherein an output unit (30) is provided between each output of the switching network (20) and the associated output (A) of the packet-switching facility, the latter being designed to divide each packet into a plurality of subpackets and to distribute said subpackets, together with subpackets of other packets arriving at the same input, over a longer period of time according to a predetermined pattern in such a manner that the subpackets belonging together are transmitted through the switching network (20) separately, the output unit (30) including an output sorter (32) with a memory (140, 321) and an addressing unit (142.....149, 322....327), and the addressing unit (142....149, 322....327) being designed to control the writing into and reading from the memory (141, 321) in such a manner that the subpackets belonging together are recombined into packets on the basis of the predetermined pattern.

6. An output unit as claimed in claim 5, characterized in that the addressing unit (142....149) includes a full adder (142) and a register (143) which is connected to the outputs of the full adder (143) and whose contents are applied as an address to the memory (141), that first a subpacket is read from a location in the memory (149) specified by said address, that immediately thereafter, a subpacket is written into said location, that the address is then increased by a predetermined step value $S_k$ by means of the full adder (142) and, upon exceeding the address range, reduced by the number of addressable locations, and that the step value $S_k$ is changed according to the relation

$$S_k = (n \times S_{k-1}) \text{ modulo } (n \times m - 1),$$

where

$$S_1 = 1$$

n = ratio of the period over which the subpackets of a packet are distributed to the duration of a packet (e.g., n = 70)

m = number of subpackets per packet (e.g., m = 40),

when the last address of the address range is reached.

7. An output unit as claimed in claim 5, characterized in that the addressing unit (322....327) includes a packet-label detector (323b) which detects the beginnings of packets, and that the subpackets are recombined into packets on the basis of the predetermined pattern, starting with the beginnings of packets detected by the packet-label detector (323b).

**Revendications**

1. Dispositif de commutation par paquets comportant une pluralité d'entrées, une pluralité de sorties et un réseau de connexion avec une pluralité d'entrées qui correspondent chacune à l'une des entrées du dispositif de commutation par paquets et avec une pluralité de sorties qui correspondent chacune à l'une des sorties du dispositif de commutation par paquets,

dispositif caractérisé par le fait qu'entre chaque entrée (E) du dispositif de commutation par paquets et l'entrée correspondante du réseau de connexion (20) se trouve un organe d'entrée (10) et qu'entre chaque sortie du réseau de connexion (20) et la sortie correspondante (A) du dispositif de commutation par paquets se trouve un organe de sortie (30), par le fait que les organes d'entrée (10) sont réalisés de façon à diviser chaque paquet en une pluralité de paquets partiels, et à répartir ces paquets partiels, selon une configuration prescrite, avec des paquets partiels d'autres paquets arrivant à la même entrée, de façon telle que les paquets partiels d'appartenance commune sont transmis par le réseau de connexion (20) séparément les uns des autres et par le fait que des organes de sortie (30) sont réalisés de façon à regrouper à nouveau en paquets des paquets partiels d'appartenance commune, sur la base de la configuration prescrite.

2. Dispositif de commutation par paquets selon la revendication 1, caractérisé par le fait que chaque organe d'entrée (10) est réalisé de façon à regrouper chaque fois une pluralité de paquets pour donner une trame, à diviser tous les paquets en une pluralité de paquets partiels de longueur identique entre eux, et à trier, en fonction du temps, les paquets partiels de façon que chaque trame soit divisée en une pluralité de sous-trames, que le nombre des paquets partiels à l'intérieur d'une sous-trame soit égal au nombre des paquets à l'intérieur d'une trame et que les paquets partiels appartenant au même paquet prennent la même position à l'intérieur de chacune des sous-trames, par le fait que le réseau de connexion (20) est réalisé de façon que les premiers paquets partiels des paquets déterminent des canaux de multiplexage par répartition dans le temps, étant précisé que les paquets partiels suivants utilisent ces canaux de multiplexage par répartition dans le temps, et par le fait que chaque organe de sortie (30) est réalisé de façon à regrouper à nouveau les paquets partiels appartenant à un paquet.

3. Organe d'entrée (10) pour un dispositif de commutation par paquets comportant une pluralité d'entrées, une pluralité de sorties et un réseau de connexion avec une pluralité d'entrées qui correspondent chacune à l'une des entrées du dispositif de commutation par paquets et avec une pluralité de sorties qui correspondent chacune à l'une des sorties du dispositif de commutation par paquets, dans le cas duquel, entre chaque entrée (E) du dispositif de commutation par paquets et l'entrée correspondante du réseau de connexion (20) se trouve un organe d'entrée (10),

organe caractérisé par le fait que l'organe d'entrée (20) présente un organe de tri d'entrée (14) avec une mémoire (141) et un organe d'adressage (142....149) et par le fait que l'organe d'adressage (142....149) est réalisé de façon à commander l'écriture dans la mémoire (141) et la relecture dans la mémoire (141) de façon telle que chaque paquet soit divisé en une pluralité de paquets partiels et que ces paquets partiels soient répartis, selon une configuration prescrite, sur un assez grand intervalle de temps, avec des paquets partiels d'autres paquets arrivant à la même entrée.

4. Organe d'entrée selon la revendication 3, caractérisé par le fait que l'organe d'adressage (142....149) présente un additionneur complet (142) et un registre (143) qui est monté en aval des sorties de l'additionneur complet (142) et dont le contenu arrive, en tant qu'adresse, à la mémoire (141), par le fait qu'en une position de mémoire, à l'adresse de laquelle on accède avec cette adresse, dans la mémoire (141), on lit tout d'abord un paquet partiel et, immédiatement après, on écrit un paquet partiel, par le fait qu'ensuite, au moyen de l'additionneur complet (142), l'adresse augmente d'un pas prescrit $S_k$ et, en cas de dépassement de la plage d'adressage, est à nouveau réduite du nombre des positions de mémoire auxquelles on peut accéder et par le fait que, lorsque l'on a atteint la dernière adresse de la plage d'adressage, on modifie le pas $S_k$ en fonction de la relation:

$$S_k = (m \times S_{k-1}) \text{ modulo } (n \times m - 1),$$

avec

$$S_1 = 1,$$

n = rapport entre l'intervalle de temps le long duquel les paquets partiels sont répartis et la durée d'un paquet (par exemple n = 70) et

m = nombre des paquets partiels par paquet (par exemple m = 40).

5. Organe de sortie (30) pour un dispositif de commutation par paquets, dispositif de commutation par paquets comportant une pluralité d'entrées, une pluralité de sorties et un réseau de connexion avec une pluralité d'entrées qui correspondent chacune à l'une des entrées du dispositif de commutation par paquets et avec une pluralité de sorties qui correspondent chacune à l'une des sorties du dispositif de commutation par paquets, dans le cas duquel, entre chaque sortie du réseau de connexion (20) et la sortie correspondante (A) du dispositif de commutation par paquets se trouve un organe de sortie (30), étant précisé que le dispositif de commutation par paquets est réalisé de façon à diviser chaque paquet en une pluralité de paquets partiels et à répartir ces paquets partiels, selon une configuration prescrite, le long d'un intervalle de temps assez grand, avec des paquets partiels d'autres paquets, arrivant à la même entrée, de façon telle que les paquets partiels d'appartenance commune soient transmis par le réseau de connexion (20) séparément les uns des autres, étant précisé que l'organe de sortie (30) présente un organe de tri de sortie (32) avec une mémoire (141, 321) et un organe d'adressage (142....149, 322....327) et que l'organe d'adressage (142....149, 322....327) est réalisé de façon à commander l'écriture dans la mémoire (141, 321) et la relecture dans la mémoire (141, 321) de façon telle que les paquets partiels d'appartenance commune sont à nouveau regroupés en paquets sur la base de la configuration prescrite.

6. Organe de sortie selon la revendication 5, caractérisé par le fait que l'organe d'adressage (142....149) présente un additionneur complet (142) et un registre (143) qui est monté en aval des sorties de l'additionneur complet (142) et dont le contenu arrive, en tant qu'adresse, à la mémoire (141), par le fait qu'en une position de mémoire, à l'adresse de laquelle on accède avec cette adresse, dans la mémoire (141), on lit tout d'abord un paquet partiel et, immédiatement après, on écrit un paquet partiel, par le fait qu'ensuite, au moyen de l'additionneur complet (142), l'adresse augmente d'un pas prescrit $S_k$ et, en cas de dépassement de la plage d'adressage, est à nouveau réduite du nombre des positions de mémoire auxquelles on peut accéder et par le fait que, lorsque l'on a atteint la dernière adresse de la plage d'adressage, on modifie le pas $S_k$ en fonction de la relation:

$$S_k = (m \times S_{k-1}) \text{ modulo } (n \times m - 1),$$

avec

$$S_1 = 1,$$

$n$      = rapport entre l'intervalle de temps le long duquel les paquets partiels sont répartis et la durée d'un paquet (par exemple $n = 70$) et

$m$      = nombre des paquets partiels par paquet (par exemple $m = 40$).

7. Organe de sortie selon la revendication 5, caractérisé par le fait que l'organe d'adressage (322....327) contient un détecteur (323b) de repères de paquets qui reconnaît les débuts de paquets et par le fait que les paquets partiels sont regroupés à nouveau en paquets sur la base de la configuration prescrite, en commençant par les débuts de paquets reconnus par le détecteur (323b) de repères de paquets.

FIG.1

FIG.2

FIG.3

FIG.4

FIG.5

328

324

325b

325c

325a

327b

327c

EN

327d

321

323b

323c

326a

326b

326c

326d

326e

326f

327e

327a

322

323a

32